(19) Europäisches Patentamt
European Patent Office
Office européen des brevets

(11) Veröffentlichungsnummer: 0 134 941
B1

(12) EUROPÄISCHE PATENTSCHRIFT

(45) Veröffentlichungstag der Patentschrifft: 28.02.90

(51) Int. Cl.⁵: C 08 F 255/02

(21) Anmeldenummer: 84107499.0

(22) Anmeldetag: 28.06.84

# (54) Verfahren zum Herstellen von Halbzeugen bzw. Formteilen aus Polypropylen.

(30) Priorität: 28.07.83 DE 3327149

(43) Veröffentlichungstag der Anmeldung: 27.03.85 Patentblatt 85/13

(45) Bekanntmachung des Hinweises auf die Patenterteilung: 28.02.90 Patentblatt 90/09

(84) Bennante Vertragsstaaten: AT BE CH DE FR GB IT LI LU NL SE

(56) Entgegenhaltungen:
BE-A-728 012
DE-A-3 035 709

CHEMICAL ABSTRACTS, Band 87, 1977, Seite 37, Nr. 24229d, Columbus, Ohio, USA; & JP - A - 77 40555 (HITACHI CHEMICAL CO., LTD.) 29.03.1977

**Die Akte enthält technische Angaben, die nach dem Eingang der Anmeldung eingereicht wurden und die nicht in dieser Patentschrift enthalten sind.**

(73) Patentinhaber: HÜLS TROISDORF AKTIENGESELLSCHAFT
Postfach 11 65
D-5210 Troisdorf (DE)

(72) Erfinder: Spielau, Paul, Dr.
Van-Gogh-Platz 10
D-5210 Troisdorf-Eschmar (DE)
Erfinder: Kühnel, Werner

D-5206 Neunkirchen-Schöneshof (DE)
Erfinder: Klaar, Karlo
Unterdorfstrasse 56a
D-5216 Niederkassel-Mondorf (DE)
Erfinder: Gasper, Betram
Feldbruch 69
D-5210 Troisdorf-Spich (DE)
Erfinder: Weiss, Richard, Dr.
Stresemannstrasse 16
D-5210 Troisdorf (DE)
Erfinder: Ulb, Horst
Friedlandstrasse 20
D-5210 Troisdorf-Sieglar (DE)
Erfinder: Breitscheidel, Hans-Ulrich
Kapellenstrasse 43
D-5200 Siegburg (DE)
Erfinder: Klingberg, Gerd
Heckenweg 17
D-5204 Lohmar-1 Heide (DE)

EP 0 134 941 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

**Beschreibung**

Die Erfindung bezieht sich auf ein Verfahren zum Herstellen von Halbzeugen bzw. Formteilen aus Polypropylen durch Aufpfropfen von Alkoxisilanverbindungen in Gegenwart eines organischen Peroxyds, indem Polypropylen Silanverbindung und Peroxyd gemischt und anschließend bei einer Temperatur von 170 bis 240°C plastifiziert und extrudiert werden.

Es ist bekannt Polyolefine unter Verwendung von Silanverbindungen in Gegenwart organischer Peroxyde zu pfropfen, s. US-PS-3 075 948, mit Beispielen für Polyethylen. Das Vernetzen von Polyethylen bzw. Ethylen-Olefin-Copolymeren unter Verwendung von Silanverbindungen in Gegenwart organischer Peroxyde und Silanolkondensations-Katalysatoren wird ausführlich auch beispielsweise in der DE-AS-1 794 028, DE-AS-1 963 571, DE-OS-3 210 192 beschrieben.

Hierbei wird davon ausgegangen, daß die Vernetzungsreaktion in zwei Stufen abläuft, so daß das Polyethylen gewünschtenfalls in vernetzungsfähiger Form gelagert werden kann, ehe nachträglich die eigentliche Vernetzung durchgeführt wird.

Es ist bekannt, daß Polypropylen, da es in der Polymerkette tertiäre C-Atome enthält gegenüber einer thermischen Beanspruchung sehr empfindlich ist und daher leicht abgebaut wird. Insbesondere läßt sich Polypropylen nicht durch Peroxyde vernetzen, da im Gegensatz zu Polyethylen bei Polypropylen die Kettenspaltung die Kettenkombination stark überwiegt und somit ein Abbau, also eine Molekulargewichtsverringerung resultiert. Auch die Verfahren zum Herstellen silanmodifizierter vernetzter Polyethylene sind daher keineswegs ohne weiteres auf Polypropylen übertragbar. In der EP-OS-0 004 034 wird ein Verfahren zum Herstellen vernetzter silanmodifizierter Polypropylene und Copolymere von Propylen beschrieben, demzufolge unter Sauerstoffausschluß während der Plastifizierung und Formgebung gearbeitet werden muß und nur spezielle Peroxyde, die den Abbau des Polypropylens nicht fördern, eingesetzt werden und die Vernetzungsreaktion der aufgepfropften Silanverbindungen in Gegenwart eines Silanolkondensationskatalysators in Wasser durchgeführt wird. Nach der EP-OS-0 004 034 werden Polypropylene mit einem MFI größer 1 d.h. Mittel- und Niedermolekulare Polypropylene mit einem Molekulargewicht bis höchstens 4 x $10^5$ eingesetzt, wobei als Peroxyde nur Di-Benzylperoxyd oder Tert.-butylperbenzoat als geeignet angesehen werden, da sie eine relativ niedrige Zerfallstemperatur aufweisen, während z. B. Dicumylperoxyd, als den thermischen Abbau des Polypropylens fördernd, für die Silanmodifizierung des Polypropylens nicht als geeignet nachgewiesen wird.

Aus der DE-OS-2 409 237 ist ein in Gegenwart von Peroxyden silanmodifiziertes Homo- oder Copolymer des Propylens bekannt, das als Haftschicht zwischen metallischen Platten unter Anwendung von Druck und Wärme verpreßt wird. Hierfür werden als isotaktisch bezeichnete Propylenpolymere eingesetzt, welche aber mittel- und niedermolekulare Polymere des Propylens mit einem MFI größer 0,8 bis 9 sind, die sich offenbar leicht pfropfen lassen und auch zu dünnen Beschichtungsfolien extrudieren lassen.

Der Erfindung liegt die Aufgabe zugrunde, ein vernetztes Halbzeug bzw. Formteil auf Basis von Polypropylen zu schaffen, als eines preiswerten Massenkunststoffes mit geringem spezifischen Gewicht und guter Chemikalien- und Wärmebestandfestigkeit. Mit der Vernetzung soll das Eigenschaftsbild gezielt verändert werden, insbesondere die Wärmestandfestigkeit und die Kälteschlagzähigkeit erhöht werden. Ausgehend von der Möglichkeit, Polyolefine mittels Silanverbindungen in Gegenwart von organischen Peroxyden zu pfropfen und mittels Silanolkondensations-Katalysatoren in Gegenwart von Wasser zu vernetzen, besteht die Aufgabe, in einem ersten Verfahrensschritt ein Halbzeug auf Basis Polypropylen zu schaffen, das noch nicht vernetzt ist, bzw. nur geringfügig anvernetzt, so daß es noch weiterverarbeitet und ggf. verformt werden kann, ehe es vollständig ausvernetzt. Ein bereits vollständig ausvernetztes Halbzeug kann nicht mehr bzw. nur geringfügig verformt werden und bereitet erhebliche Schwierigkeiten beim Bearbeiten. Eine weitere Aufgabe der Erfindung ist darin zu sehen, ein vernetztes Formteil auf Basis Polypropylen zu schaffen, das mittels textiler Flächengebilde die ein- oder aufkaschiert sind, verstärkt ist. Solche Schichtstoffe können ebenfalls im völlig ausvernetzten Zustand nicht mehr verformt werden, da sie dann sehr leicht zur Delaminierung neigen.

Nicht vernetztes Polypropylen, verstärkt mit Füllstoffen oder Glasmatten ist beispielsweise in Plastverarbeiter, 29. Jahrg. 1978, Nr. 7, Seiten 351 bis 360 und Zeitschrift Kunststoffe, 66, (1976), Nr. 12, Seiten 793 bis 797 beschrieben.

Die erfindungsgemäße Aufgabenstellung wird ausgehend von dem Verfahren gemäß Gattungsbegriff des Patentanspruchs dadurch gelöst, daß ein im wesentlichen isotaktisches Homopolymer des Propylens mit einer Dichte von 0,90 bis 0,91 g/$cm^3$ und einem Schmelzindex MFI (190°C/5 kp) kleiner 0,7 g/10 min vorzugsweise kleiner 0,1 g/10 min und einem Molekulargewicht größer 5 x $10^5$ und die Silanverbindung in Mengen von 1,0 bis 5 % und das organische Peroxid in Mengen von 0,1 bis 0,8 % bezogen auf das Gewicht des eingesetzten Polypropylens eingesetzt werden. Die erfindungsgemäß eingesetzten hochmolekularen, teilkristallinen, möglichst geringe ataktische Anteile enthaltenden Polypropylene sind relativ steif. Auch ihre MFI (230°C/2,16 kp) sind kleiner 0,7 bzw. kleiner 0,1 g/10 min.

Diese hochmolekularen Polypropylene werden im Sinn der Erfindung durch den Einsatz von organischen Peroxyden mit einer einminütigen Halbwertszeit-Temperatur von etwa 160 bis 240°C wie insbesondere Dicumylperoxyd, Tertiärbutylcumylperoxyd, Bis-tert.-butylperoxyd-Isopropyl-Benzol oder 4,4-Di-tert.-butylperoxy-n-butylvalerate, die in Mengen von 0,1 bis 0,8 % bezogen auf das Gewicht der eingesetzten Menge Polypropylen zugegeben werden, gezielt abgebaut, so daß das hochmolekulare Polypropylen etwas weicher wird. Erfindungsgemäß wird also ein gewisser Abbau des Polypropylens durch das Peroxyd bewußt herbeigeführt. Gleichzeitig wird jedoch das Polypropylen durch das Aufpfropfen der Silanverbindung wieder aufgebaut.

Bei der Durchführung des vorliegenden Verfahrens laufen in der ersten Stufe mehrere Reaktionen nebeneinander, da durch die freie radikale erzeugende Peroxidverbindung sowohl die übliche über freie radikale verlaufende Vernetzung des Polypropylens als auch die Kettenspaltung abläuft und die Pfropfung des aktivierten Polypropylens mit der Silankomponente. Die geringe mögliche Anfangsvernetzung des Extrudates ist auf die durch das Peroxid bewirkte Polypropylenvernetzung zurückzuführen, sie ist jedoch erfindungsgemäß durch die vorgesehenen Mengen und Art des Peroxids so gesteuert, daß sie eine spätere formgebende Bearbeitung des extrudierten Halbzeugs nicht beeinträchtigt. Erst in der zweiten Verfahrensstufe wird das so ggf. geringfügig anvernetzte Polypropylen durch Hydrolyse der auf das Polypropylen gepfropften Silanverbindungen, die eine Kondensationsreaktion zur chemischen Vernetzung des Silans bewirkt, fertig anvernetzt. Diese zweite Verfahrensstufe ist zeitabhängig, sie kann einerseits durch Temperatur- und/oder Feuchtigkeitszufuhr beschleunigt werden, zum anderen auch über längere Zeiträume durch Lagerung in normaler Atmosphäre nach der Formgebung erzielt werden.

Die erfindungsgemäß ausgewählten Komponenten und Bedingungen führen zu einem Extrudat, das praktisch noch unvernetzt ist und das sich durch einen MFI (230°C/2,16 kp) von 25 bis 70, vorzugsweise 30 bis 60 g/10 min auszeichnet. Es wurde gefunden, daß dieses Extrudat hervorragend geeignet ist mit textilen Flächengebilden verstärkt zu werden. Da es noch nicht vernetzt ist, können aufgrund seines Fließverhaltens textile Flächengebilde wie Glasfasermatten, -vliese, -gewebe einwandfrei d.h. luftblasenfrei penetriert werden. Danach kann dieses verstärkte und noch unvernetzte Halbzeug noch einer Bearbeitung und Verformung zu Formteilen zugeführt werden, während oder nach dem es ausvernetzt.

Neben den ausgewählten Homopolymeren des Propylens können auch geringe Mengen Propylen-Copolymere oder Block-Copolymere bis etwa 10 % bezogen auf das Gewicht des Homopropylens zugegeben werden, wobei der erfindungsgemäße MFI des Extrudates eingehalten werden muß.

Zur Herstellung des zu vernetzenden Propylens gemäß der Erfindung wird eine Alkoxysilanverbindung der Formel

$$CH_2 = \overset{\overset{\displaystyle R_1}{|}}{C} - (\underset{\underset{\displaystyle O}{||}}{C}-O)_m - (R_2)_n - Si \equiv (R_3)_3$$

gemäß Anspruch 2,
in einer Menge von 1,0 bis 5 %, bezogen auf das Gewicht der eingesetzten Menge Polypropylen, verwendet. Bevorzugt sollen die aus dieser Gruppe auszuwählenden Silanverbindungen einen Siedepunkt größer 150°C aufweisen, so daß das Silan sich während der Plastifizierung des Polypropylens nicht in merklichen Mengen verflüchtigen kann. Besonders geeignete Silanverbindungen sind das $\gamma$-Methacryloxypropyltrimethoxysilan, Siedepunkt 225°C bei 760 Torr, Vinyltris-ßmethoxyethoxysilan 285°C und das Vinyltriethoxsilan 161°C. Auch das Vinyltrimethoxysilan 120°C, läßt sich gut auf das Polypropylen aufpfropfen, hat jedoch einen niedrigen Siedepunkt, so daß die Gefahr der Verflüchtigung während des Einarbeitungs- und Plastifizierungsprozesses bei hohen Temperaturen gegeben ist.

Die erfindungsgemäß ausgewählten Stoffe und Verfahrensbedingungen ermöglichen, daß das Extrudat mit einem Anfangsvernetzungsgrad unter 20 %, vorzugsweise unter 5 %, durch Extrusion und Plastifizierung der Mischung hergestellt wird und einen um mindestens 40 % höheren Vernetzungsgrad durch Ausvernetzen durch Lagerung nach 4 bis 6 Wochen ggf. in feuchter Atmosphäre und/oder durch Verformen bei Anwendung von Wärme und Druck erreicht.

Überraschend hat sich herausgestellt, daß mit der erfindungsgemäß vorgeschlagenen Mischung unvernetztes bzw. nur leicht anvernetztes Extrudat als Halbzeug als Bahnen oder Profil hergestellt werden kann, das in normaler Atmosphäre bei Raumtemperatur wenigstens mehrere Tage gelagert werden kann, ohne daß es ausvernetzt. Während dieses Zustandes kann es noch einer Verformung zugeführt werden, während oder nach der das zum Formteil geformte Halbzeug dann ausvernetzt. Dieses bedeutet einen großen technischen Fortschritt, da das in einem ersten Verfahrensschritt hergestellte im wesentlichen nicht vernetzte Halbzeug nicht sofort weiterverarbeitet werden muß, sondern auch nach einer kurzen unproblematischen Zwischenlagerzeit die gute Verformbarkeit und Bearbeitbarkeit behält und einer weiteren Formgebung unter Anwendung von Druck und/oder Wärme zugeführt werden kann, wobei die eigentliche Vernetzung erst während dieser endgültigen Formgebung oder danach stattfindet. Würde das Halbzeug direkt bei oder direkt nach der Extrusion vollständig vernetzt, könnte es einer weiteren Formgebung nicht mehr unterworfen werden. Die erfindungsgemäß hergestellten Formteile hingegen weisen neben einer hohen Wärmeformbeständigkeit auch verbesserte Eigenschaften z. B. hinsichtlich der Kälteschlagfestigkeit auf gegenüber unvernetzten Formteilen und Halbzeugen. Darüber hinaus ist es auch möglich, das erfindungsgemäß hergestellten nahezu unvernetzten Halbzeuges in luft- und feuchtigkeitsdichter Verpackung vor einer weiteren Verarbeitung und der endgültigen Vernetzung zu lagern.

Bei dem erfindungsgemäßen Verfahren können der Mischung auch andere an sich bekannte Zusätze zugegeben werden, wie beispielsweise Antioxidationsmittel, Treibmittel, Gleitmittel, Füllstoffe wie Talcum, Calciumcarbonat, Ruß, UV-Stabilisatoren und Stabilisatoren gegenüber der schwermetallkatalytischen Zersetzung oder Farbmittel.

Der Einsatz von Stabilisatoren ist besonders wichtig, da der thermische Abbau des Polypropylens in Grenzen gehalten wird und eine höhere Verarbeitungstemperatur ermöglicht wird. Je höher die Verarbeitungstemperatur,

desto mehr wir auf das Polypropylen aufgepfropft, umso höher wird der erreichbare Endvernetzungsgrad.

Insbesondere bei der Zugabe von Füllstoffen ist für die Durchführung des erfindungsgemäßen Verfahrens darauf zu achten, daß diese sehr trocken sind, d.h. der Feuchtigkeitsgehalt ist durch Trocknen entweder des Füllstoffes oder der Vormischung von Polypropylen und Füllstoff soweit als möglich zu reduzieren. Auch Glasfasern können in Mengen von etwa 10 bis 50 % bezogen auf das Gewicht der eingesetzten Menge Polypropylen in die Mischung eingearbeitet werden.

Nach dem erfindungsgemäßen Verfahren wird, falls überhaupt vorgesehen, der Silanolkondensations-Katalysator direkt im ersten Verfahrensschritt während der Plastifizierung des Polypropylens eingearbeitet. Hierbei ist darauf zu achten, daß alle Komponenten der Mischung in trockenem Zustand, d.h. wasserfrei einzusetzen sind. Es hat sich jedoch herausgestellt daß nach dem erfindungsgemäßen Verfahren auch ohne Einsatz von Silanolkondensations-Katalysator eine hohe Vernetzung, d.h. ein hoher Vernetzungsgrad des Extrudates entweder durch Lagerung oder durch zusätzliche Behandlung mit Wärme, Druck und/oder Feuchtigkeit erzielt werden kann.

Als Silanolkondensations-Katalysatoren sind bekannt Salze von Carbonsäuren, wie Dibutylzinndilaurat, Zinnacetat, Zinn-II-Octanat, Bleinaphthenat, Zinkkaprelat, Eisen-(II)-Ethylhexanat und Organometallverbindungen einschließlich Titansäureester oder Chelatverbindungen der Titansäure wie Tetrabutyltitanat, Tetranonyltitanat, organische Basen wie Ethylamin, Hexylamin, Dibutylamin und Pluredin einschließlich anorganische Säuren und organische Säuren wie Fettsäuren. Die bevorzugten Silanolkondensations-Katalysatoren sind jedoch Organozinnverbindungen wie Dibutylzinndilaurat Dibutylzinndiacetat und Dibutylzinndioctoat. Erfindungsgemäß werden nur sehr geringe, wenn überhaupt, Mengen an Silanolkondensations-Katalysator zugegeben. Das erfindungsgemäße Verfahren zum Herstellen der vernetzten Formteile geht für die produktionstechnische Durchführung davon aus, daß die normalerweise in der Atmosphäre enthaltene Feuchtigkeit ausreicht, um die Vernetzungsreaktion zur Silanverknüpfung und Ausvernetzen der Formteile zu bewirken. Hierbei kann durchaus eine Fertigvernetzungsdauer von einigen Wochen des fertig geformten Formteils vorgesehen werden, falls dieses nicht direkt nach der Herstellung unmittelbar in Einsatz kommt. Auf diese Weise ist nach dem erfindungsgemäßen Verfahren nicht notwendig, Vorrichtungen vorzusehen, um die Vernetzungsreaktion in Heißwasser oder Dampfatmosphäre, denen die Formteile ausgesetzt werden, zu beschleunigen.

Eine bevorzugte Zusammensetzung der Mischung zum Herstellen von vernetzten Formteilen gemäß der Erfindung ist diejenige nach Anspruch 7. Sie zeichnet sich durch eine gute Verformbarkeit und Bearbeitbarkeit des Extrudates vor der endgültigen Vernetzung aus.

Bei Einsatz relativ geringer Mengen eines Silanolkondensations-Katalysators können die benötigten Mengen an Peroxid reduziert werden, wobei dennoch eine ausreichende Endvernetzung des Formteils ermöglicht wird in einer praktikablen Zeit und die Anvernetzung des extrudierten Halbzeugs, hergestellt im ersten Verfahrensschritt, so geringfügig ist, daß eine nachträgliche Formgebung, beispielsweise Vakuum-Tiefziehverformung, nicht behindert ist und die verbesserte Wärmeformbeständigkeit des vernetzten Formteils erhalten wird.

Das durch Silanverknüpfungen vernetzte Polypropylenformteil, das mit Hilfe des erfindungsgemäßen Verfahrens hergestellt wird, hat ausgezeichnete Eigenschaften, wie eine verminderte prozentuale bleibende Dehnung, hohe Spannungsrißbeständigkeit, eine verbesserte Wärmeformbeständigkeit und Kälteschlagzähigkeit.

Ein bevorzugtes Anliegen der Erfindung ist die Schaffung von verstärkten vernetzten Polypropylenformteilen, die hohe Wärmestandfestigkeiten, hohe Biegesteifigkeit und gute Kälteschlagfestigkeit aufweisen. Erfindungsgemäß wird hierzu vorgesehen, daß das Extrudat in einen von einer oder beiden Seiten mit einem textilen Flächengebilde gespeisten Walzenspalt extrudiert wird und ein- oder beidseitig das textile Flächengebilde zu einer verstärkten Bahn penetriert. Als textile Flächengebilde werden bevorzugt Glasfasermatten, Vliese, Gewebe mit einem Flächengewicht von etwa 20 bis 1200 $g/m_2$ verwendet. Damit diese Glasfasermatten o.dgl. vollständig in die thermoplastische Masse eingebettet werden, ist ein gutes Penetrationsvermögen des extrudierten modifizierten Polypropylens erforderlich. Dieses wird erreicht durch ein Extrudat mit einem MFI (230°C/2,16 kp) von 25 bis 70, vorzugsweise 30 bis 60 g/10 min. Durch die Silanmodifizierung und den Einsatz der Peroxyde gelingt es erfindungsgemäß, das hochmolekulare Polypropylen etwas weicher und für das Herstellen der verstärkten Halbzeuge nach dem erfindungsgemäß vorgeschlagenen Verfahren geeignet zu machen. Die höchsten Biegesteifigkeiten der verstärkten Extrudate bzw. Formteile werden erreicht, wenn die textilen Flächengebilde, wie Glasfasermatten an den beiden Außenseiten der extrudierten Bahnen oder Platten eingebettet sind. Es ist auch möglich, nur in der Mitte der Bahn ein textiles Flächengebilde einzubetten, wobei dies dadurch erreicht wird, daß ein weiteres Extrudat auf die außenliegende Fläche des textilen Flächengebildes über einen weiteren Walzenspalt aufgebracht wird.

Im Sinne der Erfindung sind die Verfahrensbedingungen beim Penetrieren der textilen Flächengebilde, wie beispielsweise Glasfasermatten, mit dem Extrudat so zu wählen, daß der Anfangsvernetzungsgrad des Extrudates nicht vergrößert wird. Das bedeutet insbesondere, daß die Temperaturen des Extrudates nach Verlassen des Extruders nicht mehr erhöht werden. Das so hergestellte verstärkte Extrudat bzw. Halbzeug, das praktisch noch unvernetzt ist, kann dann einer weiteren Formgebung für Formteile durch Pressen, Tiefziehen, Vakuumverformen, Vakuumstreckverfahren oder Bearbeitung wie Stanzen, Biegen, Lochen unterzogen werden. Die Ausvernetzung des Halbzeuges erfolgt dann entweder während der Formgebung oder aber durch Lagerung. Die Ausvernetzung kann durch Feuchtigkeit und Temperaturerhöhung beschleunigt werden. Es kann beispielsweise vorteilhaft sein, das anvernetzte Halbzeug vor der Formgebung in einem Wasserbad zu befeuchten und dann zu verformen, so daß die Ausvernetzung während des Verformungsvorganges unter Anwendung von Druck und Wärme beschleunigt eingeleitet wird und abläuft. Der erzielbare Vernetzungsgrad des Extrudates ist abhängig vom Silanpfropfungsgrad und dieser wiederum auch abhängig von der Verweilzeit während des Plastifizierens und Extrudierens in Gegenwart des organischen Peroxyds. Mit dem erfindungsgemäßen Verfahren werden ohne Zusatz von Silanolkondensationskatalysatoren Endvernetzungsgrade von 50 % bis 80 % und bei Zugabe von Silanolkondensationskatalysatoren von 60 bis 90 % je nach Komposition erreicht.

Vorteilhaft ist der Zusatz von Antioxidantien in Mengen von 0,1 bis 1,0 % bezogen auf das Gewicht der eingesetzten Menge Polypropylen, wie beispielsweise sterisch gehinderter Phenole, die die Wärmebeständigkeit erhöhen und auf diese Weise das Herstellen von Formteilen unter erneuter Erwärmung ohne klebrig zu werden, erleichtern. Es ist vorteilhaft, die Formteile aus den Extrudaten bei möglichst hohen Temperaturen durch Verpressen herzustellen, da dies sowohl eine gute Ausformung als auch die Herstellung komplizierter Teile wie sie beispielsweise im Automobilbau für Karosserieteile mit hohen Verformungsgraden benötigt werden, ermöglicht.

Der Endvernetzungsgrad der erfindungsgemäß hergestellten Formteile ist auch abhängig von der Menge des gepfropften Silans. Je höher die Verarbeitungstemperatur während der Plastifizierung des Polypropylens, desto mehr Silanverbindung pfropft auf das Polypropylen, eine desto höherer Endvernetzungsgrad wird später erreicht. Auch wird ein umso höherer Pfropfungsgrad erreicht, je länger die Verweilzeit beim Plastifizieren, d.h. im Extruder ist.

Der Vernetzungsgrad wird bestimmt durch die Prozentangabe des Dekalinunlöslichen, d.h. durch 20 Stunden langes Erhitzen in siedendem Dekalin wird unter Rückfluß der Gehalt an unlöslichem Gel des vernetzten Materials bestimmt.

Erfindungsgemäß werden vernetzte Formteile aus eine verformten Extrudat aus einem in Gegenwart eines organischen Peroxyds mit einer Alkoxisilanverbindung gepfropften im wesentlichen isotaktischen Homopolymer des Propylens einer Dichte von 0,90 bis 0,91 g/cm$^3$ und einem MFI (190°C/5 kp) kleiner 0,7 vorzugsweise 0,1 g/10 min und einem Molekulargewicht größer 5 x 10$^5$ enthaltend eine einseitig und/oder beidseitig aufkaschierte und/oder vollständig eingebettete textile Flächengebilde insbesondere auf Glasfaserbasis vorgeschlagen. Das vernetzte Halbzeug bzw. die vernetzten Formteile nach der Erfindung können vorteilhaft als Konstruktionsteile z. B. im Apparatebau, Maschinenbau, Kraftfahrzeugbau, Flugzeugbau eingesetzt werden, wegen ihrer Wärmeformbeständigkeit, bezüglich beispielsweise Motor- und Abgaswärme und Leichtgewichtigkeit insbesondere bei Glasfaserverstärkung.

Es ist auch möglich, die vernetzbaren Mischungen gemäß der Erfindung direkt im ersten Plastifiziervorgang zu einem Fertigprodukt zu formen, beispielsweise einem Spritzgußteil das bei Fertigstellung erst anvernetzt ist und nach einer Lagerzeit unter normalen Bedingungen nachvernetzt und nach ca. 6 bis 8 Wochen den gewünschten Endvernetzungsgrad erreicht.

Die Erfindung wird nachfolgend an einigen Beispielen erläutert. Dabei wurde in folgender Weise verfahren:

Als Ausgangsmaterial wird Polypropylen in Pulver- oder Granulatform mit Peroxyd, Silan und ggf. Silanolkondensationskatalysator sowie Stabilisatoren, Antioxidantien und übliche Hilfsmittel kalt gemischt. Für den Fall, daß Füllstoffe vorgesehen sind, werden die Füllstoffe zuerst mit dem Polypropylen zu Granulat verarbeitet und getrocknet, dann anschließend dieser Vormischung die Peroxyde, Silan und Silanolkondensationskatalysator und ggf. weitere Hilfsstoffe zugegeben. Diese Mischung wird dann in einem Extruder zu einer Bahn extrudiert, wobei die Austrittstemperatur des Extrudates aus dem Extruder etwa bei 220°C liegt. Es wird der Vernetzungsgrad, d.h. die Anfangsvernetzung des Extrudates direkt nach der Extrusion am ersten Tag festgestellt und dann die erzielbaren Vernetzungsgrade nach mehrtägigen Lagerungen in normaler Atmosphäre oder unter zusätzlicher Feuchtigkeit und Temperatur bzw. nach einer weiteren Formgebung unter Anwendung von Druck und Wärme.

**Beispiele 1 bis 6**

Aus den in der Tabelle I angegebenen Rezepturen, denen noch Antioxidantien in üblicher Menge zugegeben wurde, wobei VTMO = Vinyltrimethoxysilan, MEMO = γ-Methacryloxipropyltrimethoxisilan, DCP = Dicumylperoxyd und DBTL = Dibutylzinndilaurat bedeuten, wurde eine Mischung in einem Henschelmischer bei etwa 25°C hergestellt. Anschließend wurde diese Mischung in einem Einspindelschneckenextruder plastifiziert und verließ die Extruderdüse mit einer Temperatur von etwa 220°C in Bandform von 40 mm Breite und 2 mm Dicke. Dann wurde der Vernetzungsgrad des frisch extrudierten Bandes bestimmt, sowie nach Lagerung in Raumatmosphäre und ggf. nach Behandlung und Lagerung in heißem Wasser. Der Vergleich der Beispiele 1 und 2 zeigt, daß der Einsatz einer Silanverbindung mit einem höheren Siedepunkt, MEMO hat einen Siedepunkt von 255°C bei 760 Torr, sich positiv auf eine höhere Endvernetzung auswirkt, da offensichtlich bei VTMO mit einem Siedepunkt von 120°C bei 760 Torr ein größerer Anteil an VTMO durch Verflüchtigung verloren geht. Auf diese Weise ist nach Beispiel 1 der Pfropfungsgrad und damit auch der spätere erzielbare Vernetzungsgrad der Silanverbindung nicht so hoch.

Beispiel 5 zeigt, das zu geringe Mengen an Silan nicht zu einem ausreichend hohen Endvernetzungsgrad führen.

Bei den Beispielen 3 und 4 ist der Einfluß des Zusatzes von Silanolkondensationskatalysator dargestellt, der aufzeigt, daß durch den Zusatz von Silanolkondensationskatalysator die Vernetzung bei Lagerung bei Raumtemperatur mit höheren Anteilen an Silanolkondensationskatalysator schneller voranschreitet; das gilt auch für Beispiel 6 mit einem als Silanolkondensationskatalysator wirkenden Stabilisator auf Basis eines phenolischen Antioxidants.

Alle gemäß den Beispielen 1 bis 4 hergestellten Halbzeuge können innerhalb einer mehr oder weniger langen Zeit nach der Herstellung des Halbzeuges noch sehr gut weiterverarbeitet werden, beispielsweise durch Tiefziehen oder Pressen unter Anwendung von Druck und Wärme zu Formteilen verarbeitet werden. Die weitere

Ausvernetzung bis zur Endvernetzung wird in der Regel durch die angewendeten Temperaturen bei der Verformung eingeleitet und durchgeführt. Die Anwendung hoher Anteile von Silanolkondensationskatalysatoren über 0,05 Gew.-% bezogen auf das Polypropylen sind nur für solche Halbzeuge bzw. Extrudate zu empfehlen, die keiner weiteren Bearbeitung oder Verformung noch unterworfen werden bevor sie zum endgültigen Einsatz kommen, da sie in der Regel eine erhöhte Anfangsvernetzung bewirken, die eine noch vorzunehmende Bearbeitung oder Verformung behindert.

**Tabelle I**

| Beispiele | 1 | 2 | 3 | 4 | 5 | 6 |
|---|---|---|---|---|---|---|
| PP-H, Gew.-Teile MFI (190/5) 0,1/10 min | 100 | 100 | 100 | 100 | 100 | 100 |
| VTMO Gew.-Teile | 2 | | 2 | 2 | | 2 |
| MEMO Gew.-Teile | | 2 | | | 0,5 | |
| DCP 95 % ** | 0,4 | 0,4 | 0,4 | 0,4 | 0,4 | 0,4 |
| DBTL Gew.-Teile | | | 0,05 | 0,1 | 0,05 | |
| Irgastab 2002 Gew.-T. | | | | | | 0,05 |
| Vernetzungsgrad % | | | | | | |
| 1. Tag | 0 | <1 | <1 | 0 | <1 | 0 |
| 7. Tag | | | | 8 | | 0 |
| 48. Tag | 1 | | 50 | 80 | | |
| nach 3 Tagen Lagerung im heißen Wasser 95°C | 55 | 94 | 60 | | 20 | 80 |

**Beispiele 7 bis 11**

Aus den in Tabelle II angegebenen Rezepturen wurden wie in Beispiel 1 bis 6 beschrieben, Bänder extrudiert und der Vernetzungsgrad nach Extrusion und Lagerung bestimmt. In den Beispielen 7 bis 11 wurden verschiedene Peroxyde eingesetzt. Gutes Extrusionsverhalten, d.h. einwandfreies Plastifizieren und Extrudieren zeigten die Rezepturen mit DCP, s.u.a. Beispiel 1 bis 6 und Beispiele 7, 8, 11. DCP hat eine einminütige Halbwertszeittemperatur von 180°C, Peroxyd A von 160°C Peroxyd D von 185°C. Die Mischungen nach Beispiel 9 und 10 ließen sich schwer extrudieren, d.h. der Extruder hatte eine wesentlich höhere Stromaufnahme, dies ist auf die eingesetzten Peroxyde mit niedriger einminütiger Halbwert-Zerfallstemperatur, bei Peroxyd B 130°C, bei Peroxyd C 110°C, zurückzuführen. Diese Peroxyde sind nicht geeignet, bei dem Verfahren nach der Erfindung mit hochmolekularen Propylenhomopolymeren eingesetzt zu werden, da sie keinen geeigneten Abbau des Polypropylens im Sinne der Erfindung bewirken.

**Tabelle II**

| Beispiele | 7 | 8 | 9 | 10 | 11 |
|---|---|---|---|---|---|
| PP-H, Gew.-Teile MFI (190/5) <0,1 | 100 | 100 | 100 | 100 | 100 |
| VTMO | 2 | | 2 | 2 | 2 |
| DBTL | 0,05 | | 0,05 | 0,05 | 0,05 |
| Memo | | 2 | | | |
| Peroxyd A | 0,4 | 0,4 | | | |
| Peroxyd B | | | 0,8 | | |
| Peroxyd C | | | | 0,8 | |
| Peroxyd D | | | | | 1,0 |
| Vernetzungsgrad % | | | | | |
| 1. Tag | <1 | <1 | 2 | 1 | 2 |
| 2 Tage Lagerung heißes Wasser 95°C | 62 | 90 | 87 | 47 | 75 |

Peroxyd A = Tert. butylperoxi (3.5.5-trimethyl) hexoat
Peroxyd B = dibenzoylperoxid 5 %
Peroxyd C = bis(2,4-dichlor-benzyl) peroxid 50 %
Peroxyd D = bis-C-tertiär butylperoxiisopropylbenzol

**Tabelle III**

| Beispiele | 12 | 13 | 14 | 15 | 3 |
|---|---|---|---|---|---|
| PP-H Gew.-Teile MFI (190/5) 0,6 g/10 min | 100 | | | | 100 MFI(10,0/5) <0,1 |
| PP-Block-Coplymer Gew.-Teile MFI (190/5) 5 g/10 min | | 100 | | | |
| PP-H Gew.-Teile MFI (190/5) 3 g/10 min | | | 100 | | |
| PP-H Gew.-Teile MFI (190/5) 55 g/10 min | | | | 100 | |
| DCP 95 % Gew.-Teile | 0,4 | 0,4 | 0,4 | 0,4 | 0,4 |
| DBTL Gew.-Teile | 0,05 | 0,05 | 0.05 | 0,05 | 0,05 |
| Memo Gew.-T. | 2.0 | | | | |
| VTMO Gew.-T. | | 2,0 | 2,0 | 2,0 | 2.0 |
| Vernetzungsgrad % | | | | | |
| 1. Tag | 2 | 14 | <1 | <1 | <1 |
| 3 Tage Lagerung in heißem Wasser 95°C | 57 | 29 | 12 | <1 | 60 |

**Beispiele 12 bis 15**

Die Beispiele 12 bis 15 und 3 nach Tabelle III, hergestellt analog den vorangehenden Beispielen zeigen das Verhalten von Polypropylen in Abhängigkeit vom Schmelzflußindex MFI. Ein sehr hoher Schmelzflußindex führt weder zu einer Anfangsvernetzung noch zu einer ausreichenden Silanpropfung, so daß auch bei Einsatz von Silanolkondensationskatalysator kein ausreichender Endvernetzungsgrad über 40 oder mehr % erreicht wird. Das Beispiel 13 zeigt das Verhalten eines Propylen-Copolymeren das eine relativ hohe peroxidische Anfangsvernetzung zeigt, aber bei nur geringen erzielbaren Silanpfropfungsgrad einen niedrigen Endvernetzungsgrad erzielt.

**Tabelle IV**

| Beispiel | 16 | 17 | 18 |
|---|---|---|---|
| PP-H Gew.-Teile MFI (190/5) <0,1 | 100 | 100 | 100 |
| VTMO Gew.-Teile | 2 | 2 | 2 |
| DCP 95 % Gew.-T. | 0,4 | 0,4 | 0.4 |
| DBTL Gew.-Teile | 0,05 | 0,05 | 0,05 |
| Corax N 550 FEF Gew.-Teile | 20 | | |
| Sillithin Z82 Gew.-Teile | | 20 | |
| Albogel 10 | | | 20 |
| Vernetzungsgrad % | | | |
| 1. Tag | 0 | 0 | 0 |
| 2 Tage Lagerung in heißem Wasser 95°C | 69 | 70 | 64 |

Sillithin Z82 ist Kieselkreide (Fa. Hoffmann)
Albogel 10 ist Kreide (Albogelwerke Graz)
Corax N 550 FEF ist Ruß

**Beispiele 16 bis 18**

Bei den Beispielen 16 bis 18 wurde das PP-H-Pulver mit dem Füllstoff vorgemischt und getrocknet, dann wie in den vorangehenden Beispielen weiterverarbeitet. Es zeigt sich, daß das erfindungsgemäße Verfahren zum Herstellen von silanvernetzten Polypropylen-Formteilen auch auf gefülltes Polypropylen anwendbar ist.

In der Figur 1 ist schematisch ein vorteilhaftes Verfahren zum Herstellen eines endlosen mit Fasermatten verstärkten Extrudates im noch unvernetzten Zustand dargestellt. Zum Herstellen einer verstärkten Bahn 8 mit vollständig eingebetteter Fasermatte werden zwei Extruder 1 und 1a zum Extrudieren eines bahnförmigen Extrudates 3, 3a, vorzugsweise gleicher Dicke vorgesehen und ein Dreiwalzenkalander mit den Walzen 6a, 6b und 6c. Die endlose Fasermatte 2, beispielsweise eine Glasfasermatte mit einem Flächengewicht von 800 $g/m^2$ wird von einer Vorratsrolle 4 abgezogen und über die Walze 6a in den zwischen der Walze 6a und der Walze 6b gebildeten Walzenspalt eingeführt, in den auch das bahnförmige Extrudat 3 einläuft. Das Extrudat 3 ist noch plastisch und weist eine solche Viskosität entsprechend dem eingestellten Schmelzflußindex auf, daß es sehr gut in die Glasfasermatte 2 penetriert und diese vollständig luftblasenfrei durchtränkt. Dieser Penetrationsvorgang wird durch den relativ großen Umschlingungswinkel mit dem das Extrudat um die Walze 6b geführt wird, noch gefördert. In dem zwischen den Walzen 6b und 6c gebildeten Walzenspalt wird auf die außenliegende Fläche der Glasfasermatte 2 eine zweite Bahn 3a des Extrudates aufgebracht und mit der Bahn 8a verbunden. Die so hergestellte verstärkte Bahn 8 wird dann über die Walze 6c geführt und mittels der Abzugsrollen 7 abgezogen.

Es ist auch möglich, in einen zwischen zwei Walzen gebildeten Walzenspalt von beiden Seiten eine Fasermatte zuzuführen und mittig in den Walzenspalt das bahnförmige Extrudat im noch plastischen Zustand einzuführen. Zur Erhöhung und Verlängerung des auszuübenden Preßdruckes können die Walzen zu einer Doppelbandpresse gehören, so daß das einwandfreie Penetrieren des Extrudates in die Glasfasermatten beim Durchlaufen der Doppelbandpresse zwischen den Bändern über eine längere Wegstrecke erfolgen kann.

Das auf diese Weise wie auch in der Figur 1 dargestellte verstärkte Halbzeug in Gestalt der verstärkten Bahn 8 ist praktisch noch unvernetzt und kann in diesem Zustand sehr gut verformt werden. Wenn es dann während oder nach der Verformung vernetzt, wird eine hohe Wärmeformbeständigkeit erreicht und die im unvernetzten Zustand erreichte gute Ausformung des Formteils beibehalten. Ein solches vernetztes verstärktes Formteil hat gegenüber einem nicht vernetzten Formteil, das aus einem normalen Polypropylen hergestellt wird, eine verbesserte Wärmeformbeständigkeit. Bei einem nicht vernetzten verstärkten Polypropylenformteil wird das Polypropylen bei Temperaturbeeinflussung in der Nähe des Kristallitschmelzpunktes des Polypropylens weich, wodurch sich die inneren Verformungspannungen lösen und die Verstärkung, beispielsweise eine Glasfasermatte aufquillt und aus dem weichgewordenen Thermoplasten herausdrückt. Vorteilhaft werden verstärkte Bahnen 8 hergestellt mit einem Glasfasergehalt von etwa 25 bis 45 Gew.-% bezogen auf das Extrudat. Bei höheren Glasfasergehalten wird die Verformbarkeit infolge der höheren Steifigkeit verschlechtert.

**Patentansprüche**

1. Verfahren zum Herstellen von Halbzeugen bzw. Formteilen aus Polypropylen durch Aufpfropfen von Alkoxisilanverbindungen in Gegenwart eines organischen Peroxyds, in dem Polypropylen, Silanverbindung und Peroxyd gemischt und anschließend bei einer Temperatur von etwa 170 bis 240°C plastifiziert und extrudiert werden, *dadurch gekennzeichnet*, daß ein im wesentlichen isotaktisches Homopolymer des Propylens mit einer Dichte von etwa 0,90 bis 0,91 $g/cm^3$ und einem Schmelzindex MFI (190°C/5 kp) kleiner 0,7 g/10 min., vorzugsweise kleiner 0,1 g/10 min. und einem Molekulargewicht größer $5 \cdot 10^5$ eingesetzt wird und die Silanverbindung in Mengen von 1,0 bis 5 % und das organische Peroxyd in Mengen von 0,1 bis 0,8 % bezogen auf das Gewicht der eingesetzten Menge Polypropylen, eingesetzt werden.

2. Verfahren nach Anspruch 1, *dadurch gekennzeichnet*, daß eine Alkoxisilanverbindung der Formel

$$\begin{array}{l} \quad\;\; R_1 \\ \quad\;\; | \\ CH_2 = C - (C{-}O)_m - (R_2)_n - Si \equiv (R_3)_3 \\ \qquad\qquad \| \\ \qquad\qquad O \end{array}$$

worin $R_1$ Wasserstoff oder ein Alkylradikal mit 1 bis 4 Kohlenstoffatomen, $R_2$ ein gradkettiges Alkylenradikal mit 1 bis 10 Kohlenstoffatomen, $R_3$ ein Alkoxyradikal mit 1 bis 5 Kohlenstoffatomen, das ggf. durch ein Sauerstoffatom unterbrochen sein kann und m und n gleich 0 oder 1 sind eingesetzt wird.

3. Verfahren nach Anspruch 1 oder 2, *dadurch gekennzeichnet*, daß ein organisches Peroxyd mit einer einminütigen Halbwertszeit-Temperatur von etwa 160 bis 240°C verwendet wird.

4. Verfahren nach einem der Ansprüche 1 bis 3, *dadurch gekennzeichnet*, daß bis zu 0,1 % eines Silanolkondensationskatalysators, bezogen auf das Gewicht der eingesetzten Menge Polypropylen zugegeben werden.

5. Verfahren nach einem der Ansprüche 1 bis 4, *dadurch gekennzeichnet*, daß das Extrudat (d.h. die Halbzeuge bzw.

Formteile) mit einem Anfangsvernetzungsgrad unter 20 %, vorzugsweise unter 5 % hergestellt wird und einen um mindestens 40 % höheren Vernetzungsgrad als den Anfangsvernetzungsgrad durch Ausvernetzen durch Lagerung nach 4 bis 6 Wochen ggf. in feuchter Atmosphäre und/oder durch Verformen bei Anwendung von Wärme und Druck erreicht.

6. Verfahren nach einem der Ansprüche 1 bis 5, *dadurch gekennzeichnet*, daß das Extrudat einen MFI (230°C/2,16 kp) von 25 bis 70, vorzugsweise 30 bis 60 g/10 min aufweist.

7. Verfahren nach einem der Ansprüche 1 bis 6, *dadurch gekennzeichnet*, daß eine Mischung enthaltend auf 100 Gew.-Teile Polypropylen mit einem MFI (190°C/5 kp) kleiner 0,1 g/10 min

- 0,2 bis 0,5 Gew.-Teile Dicumylperoxyd,
- 1,5 bis 3,5 Gew.-Teile eines Silans mit einem Siedepunkt bei 760 Torr größer 150°C wie $\gamma$ - Methacryloxypropyltrimethoxysilan,
- 0 bis 0,1 Gew.-Teile Silanolkondensationskatalysator, wie Dibutylzinndilaurat oder Dibutylzinndiacetat

bei einer Temperatur von 190 bis 220°C zu einem Extrudat mit einem Anfangsvernetzungsgrad unter 2 % extrudiert wird.

8. Verfahren nach einem der Ansprüche 1 bis 7, *dadurch gekennzeichnet*, daß das Extrudat in einen von einer oder beiden Seiten mit einem textilen Flächengebilde gespeisten Walzenspalt extrudiert wird und ein- oder beidseitig das textile Flächengebilde zu einer verstärkten Bahn penetriert.

9. Verfahren nach Anspruch 8, *dadurch gekennzeichnet*, daß ein weiteres Extrudat auf die außenliegende Fläche des textilen Flächengebilde der verstärkten Bahn über einen weiteren Walzenspalt aufgebracht wird.

10. Verfahren nach einem der Ansprüche 8 oder 9, *dadurch gekennzeichnet*, daß als textile Flächengebilde Glasfasermatten, -vliese, -gewebe o.dgl. mit einem Flächengewicht von etwa 20 bis 1200 $g/m^2$ verwendet werden.

11. Verfahren nach Anspruch 10, *dadurch gekennzeichnet*, daß das Penetrieren der Glasfasermatten mit dem Extrudat bei Verfahrensbedingungen so durchgeführt wird, die den Anfangsvernetzungsgrad des Extrudats nicht vergrößern.

12. Verfahren nach einem der Ansprüche 1 bis 11, *dadurch gekennzeichnet*, daß das Extrudat bzw. die verstärkte Bahn im anfangsvernetzten Zustand vorzugsweise innerhalb 20 Tagen nach der Extrusion unter Erwärmung auf Temperaturen von 170 bis 210°C zu Formteilen geformt, z. B. preßverformt, tiefgezogen oder vakuumverformt wird und dabei die weitere Vernetzung des Extrudats eingeleitet bzw. zu Ende geführt wird.

13. Verfahren nach Anspruch 12, *dadurch gekennzeichnet*, daß das Extrudat bzw. die verstärkte Bahn vor dem Verformen befeuchtet wird.

14. Vernetztes Formteil aus einem unter Anwendung von Druck und Wärme verformten Extrudat aus einem in Gegenwart eines organischen Peroxyds mit einer Alkoxysilanverbindung gepfropften im wesentlichen isotaktischen Homopolymer des Propylens einer Dichte von 0,90 bis 0,91 $g/cm^3$ und einem MFI (190°C/5 kp) kleiner 0,7 vorzugsweise kleiner 0,1 g/10 min und einem Molekulargewicht größer $5 \cdot 10^5$ enthaltend ein einseitig und/oder beidseitig aufkaschiertes und/oder vollständig eingebettetes textiles Flächengebilde, insbesondere auf Glasfaserbasis.

## Claims

1. Process for the production of semi-manufactured articles, particularly polypropylene mouldings, by grafting on of alkoxysilane compounds in the presence of an organic peroxide, in which polypropylene, silane compound and peroxide are mixed and then plasticised and extruded at a temperature of about 170 to 240°C, characterised in that an essentially isotactic homopolymer of propylene with a density of about 0.90 to 0.91 $g/cm^3$ and a melt index MFI (190°C/5 kp) of less than 0.7 g/10 min, preferably less than 0.1 g/min and a molecular weight greater than $5 \times 10^5$ is employed and the silane compound and the organic peroxide are employed respectively in amounts of 1.0 to 5 % and 0.1 to 0.8 % related to the weight of the amount of polypropylene employed.

2. Process according to claim 1, characterised in that there is employed an alkoxysilane compound of the formula

$R_1$
|
$CH_2 = C - (C\text{-}O)_m - (R_2)_n\text{-}Si \equiv (R_3)_3$
||
O

wherein $R_1$ is hydrogen or an alkyl radical with 1 to 4 carbon atoms, $R_2$ is a straight-chain alkylene radical with 1 to 10 carbon atoms, $R_3$ is an alkoxy radical with 1 to 5 carbon atoms, which can optionally be interrupted by an oxygen atom and m and n are equal to 0 or 1.

3. Process according to claim 1 or 2, characterised in that an organic peroxide with a one minute half life temperature of about 160 to 240°C is used.

4. Process according to one of claims 1 to 3, characterised in that up to 0.1 % of a silanol condensation catalyst, related to the weight of the amount of polypropylene employed, are added.

5. Process according to one of claims 1 to 4, characterised in that the extrudate (that is the semi-manufactured article, particularly moulding) is produced with an initial degree of cross-linking below 20 %, preferably below 5 % and achieves a degree of cross-linking at least 40 % higher than the initial degree of cross-linking as a result of cross-linking on storage for 4 to 6 weeks, possibly in a moist atmosphere, and/or by shaping with use of heat and pressure.

6. Process according to one of claims 1 to 5, characterised in that the extrudate has an MFI (230°C/2.16 kp) of 25 to 70, preferably 30 to 60g/10 min.

7. Process according to one of claims 1 to 6, characterised in that a mixture containing, for 100 parts by weight of polypropylene with an MFI (190°C/5 kp) of less than 0.1 g/10 min,

- 0.2 to 0.5 parts by weight of dicumyl peroxide
- 1.5 to 3.5 parts by weight of silane with a boiling point at 760 mm Hg of less than 150°C, such as $\gamma$-methacryloxypropyltrimethoxysilane
- 0 to 0.1 parts by weight of silanol condensation catalyst such as dibutyltin dilaurate or dibutyltin diacetate

is extruded at a temperature of 190 to 220°C to form an extrudate with an initial degree of cross-linking below 2 %.

8. Process according to one of claims 1 to 7, characterised in that the extrudate is extruded into a roller gap fed from one or both sides with a textile sheet and, on one or both sides, the textile sheet penetrates to form a reinforced web.

9. Process according to claim 8, characterised in that a further extrudate is applied to the external surface of the textile sheet of the reinforced web via a further roller gap.

10. Process according to one of claims 8 or 9, characterised in that glass fibre mats, fleeces, fabrics or the like with a weight per unit area of about 20 to 1200 g/m$^2$ are used as textile sheets.

11. Process according to claim 10, characterised in that the penetration of the glass fibre mats with the extrudate is carried out under process conditions such that the initial degree of cross-linking of the extrudate is not increased.

12. Process according to one of claims 1 to 11, characterised in that the extrudate, particularly the reinforced web in the initially cross-linked state, is shaped within 20 days after the extrusion under heating to temperatures of 170 to 210°C to form mouldings, e.g. shaped under pressure, deep drawn or vacuum deformed, and then the further cross-linking of the extrudate is commenced or terminated respectively.

13. Process according to claim 12, characterised in that the extrudate or the reinforced web is moistened before the shaping.

14. Cross-linked moulding formed from an extrudate shaped under use of pressure and heat, the extrudate being formed of an isotactic homopolymer of propylene of a density of 0.90 to 0.91 g/cm$^3$ and an MFI (190°C/5 kp) of less than 0.7 preferably less than 0.1 g/10 min and a molecular weight greater than 5 x 10$^5$ grafted with an alkoxysilane compound in the presence of an organic peroxide, the moulding containing a textile sheet, in particular one based on glass fibres, laminated on one/or both sides and/or completely embedded.

**Revendications**

1. Procédé pour la fabrication de produits semi-finis ou d'articles moulés en polypropylène, par greffage de composés alcoxysilanes en présence d'un peroxyde organique, dans lequel on mélange le polypropylène, le composé silane et le peroxyde, puis on les plastifie et les extrude à une température d'environ 170 à 240°C, caractérisé en ce qu'on utilise un homopolymère essentiellement isotactique du propylène, ayant une masse volumique de 0,90 à 0,91 g/cm$^3$ et un indice de fluidité MFI (190°C/5 kg) inférieur à 0,7 g/10 min, de préférence inférieur à 0,1 g/10 min, et ayant une masse moléculaire supérieure à 5 · 10$^5$, et qu'on utilise le composé silane selon des quantités de 1,0 à 5 % et le peroxyde organique selon des quantités de 0,1 à 0,8 % par rapport au poids de la quantité utilisée de polypropylène.

2. Procédé selon la revendication 1, caractérisé en ce qu'on utilise un composé alcoxysilane de formule

$$CH_2 = \overset{\overset{\displaystyle R_1}{|}}{C} - (\underset{\underset{\displaystyle O}{\|}}{C}\text{-}O)_m\text{-} (R_2)_n\text{-}Si \equiv (R_3)_3$$

dans laquelle $R_1$ est un hydrogène ou un radical alkyle ayant de 1 à 4 atomes de carbone, $R_2$ est un radical alkylène à chaîne droite ayant de 1 à 10 atomes de carbone, $R_3$ est un radical alcoxy ayant de 1 à 5 atomes de carbone, pouvant être éventuellement interrompu par un atome d'oxygène, et m et n sont égaux à 0 ou 1.

3. Procédé selon la revendication 1 ou 2, caractérisé en ce qu'on utilise un peroxyde organique ayant une température de demi-vie d'1 minute d'e"viron 160 à 240°C.

4. Procédé selon l'une des revendications 1 à 3, caractérisé en ce qu'on ajoute jusqu'à 0,1 % d'un catalyseur à base d'un produit de condensation des silanols, par rapport au poids de la quantité utilisée de polypropylène.

5. Procédé selon l'une des revendications 1 à 4, caractérisé en ce que l'extrudat (c'est-à-dire les produits semi-finis ou les articles moulés) est fabriqué avec un taux de réticulation initial inférieur à 20 %, de préférence inférieur à 5 %, et qu'on atteint un degré de réticulation d'au moins 40 % plus élevé que le degré de réticulation initial, par réticulation complète obtenue par stockage, au bout de 4 à 6 semaines, éventuellement en atmosphère humide, et/ou par façonnage avec l'utilisation de la chaleur et de la pression.

6. Procédé selon l'une des revendications 1 à 5, caractérisé en ce que l'extrudat présente un indice MFI (230°C/2,16 kg) de 25 à 70, de préférence de 30 à 60 g/10 minutes.

7. Procédé selon l'une des revendications 1 à 6, caractérisé en ce qu'on extrude un mélange contenant 100 parties en poids d'un polypropylène ayant un indice MFI (190°C/5 kg) inférieur à 0,1 g/10 min,

- 0,2 à 0,5 parties en poids de peroxyde de dicumyle,
- 1,5 à 3,5 parties en poids d'un silane ayant un point d'ébullition à 101,3 kPa (760 Torr) supérieur à 150°C, comme le gamma-méthacryloxypropyltriméthoxysilane,
- 0 à 0,1 partie en poids d'un catalyseur de condensation des phénols. Comme le dilaurate de dibutylétain ou le diacétate de dibutylétain,

à une température de 190 à 220°C, pour obtenir un extrudat ayant un degré de réticulation initial inférieur à 2 %.

8. Procédé selon l'une des revendications 1 à 7, caractérisé en ce que l'extrudat est extrudé à travers l'écartement entre deux cylindres, écartement alimenté sur un côté ou sur les deux côtés par une étoffe textile, et pénètre sur une face ou sur les deux faces dans l'étoffe textile, pour donner une bande renforcée.

9. Procédé selon la revendication 8, caractérisé en ce qu'un extrudat supplémentaire est appliqué sur la surface extérieure de l'étoffe textile de la bande renforcée, en passant par un autre écartement entre des cylindres.

10. Procédé selon l'une des revendications 8 ou 9, caractérisé en ce qu'on utilise comme étoffes textiles des nattes, des non-tissés, des tissus en fibres de verre, ou analogues, ayant une masse surfacique d'environ 20 à 1200 $g/m^2$.

11. Procédé selon la revendication 10, caractérisé en ce que la pénétration de l'extrudat dans les nattes de fibres de verre, dans les conditions du procédé, est mis en oeuvre de façon à ne pas augmenter le degré de réticulation initial de l'extrudat.

12. Procédé selon l'une des revendications 1 à 11, caractérisé en ce que l'extrudat, ou la bande renforcée est, dans son état correspondant à une réticulation initiale, de préférence dans les 20 jours suivant l'extrusion, et sous l'effet d'une élévation de la température à 170-210°C, façonné pour donner des articles moulés, par exemple formés à la presse, emboutis ou moulés sous vide, et pendant cette opération est déclenchée ou amenée à son terme la nouvelle réticulation de l'extrudat.

13. Procédé selon la revendication 12, caractérisé en ce que l'extrudat ou la bande renforcée est humidifié avant le façonnage.

14. Article moulé réticulé, en un extrudat façonné grâce à l'utilisation de la pression et de la chaleur, en un homopolymère du propylène, essentiellement isotactique, greffé avec un composé alcoxysilane en présence d'un peroxyde organique, ayant une masse volumique de 0,90 à 0,91 $g/cm^2$ et un indice MFI (190°C/5 kg) inférieur à 0,7, de préférence inférieur à 0,1 g/10 min, et ayant une masse moléculaire supérieure à $5 \cdot 10^5$, contenant une étoffe textile, en particulier à base de fibres de verre, enduite et/ou entièrement enrobée sur une face et/ou sur les deux faces.

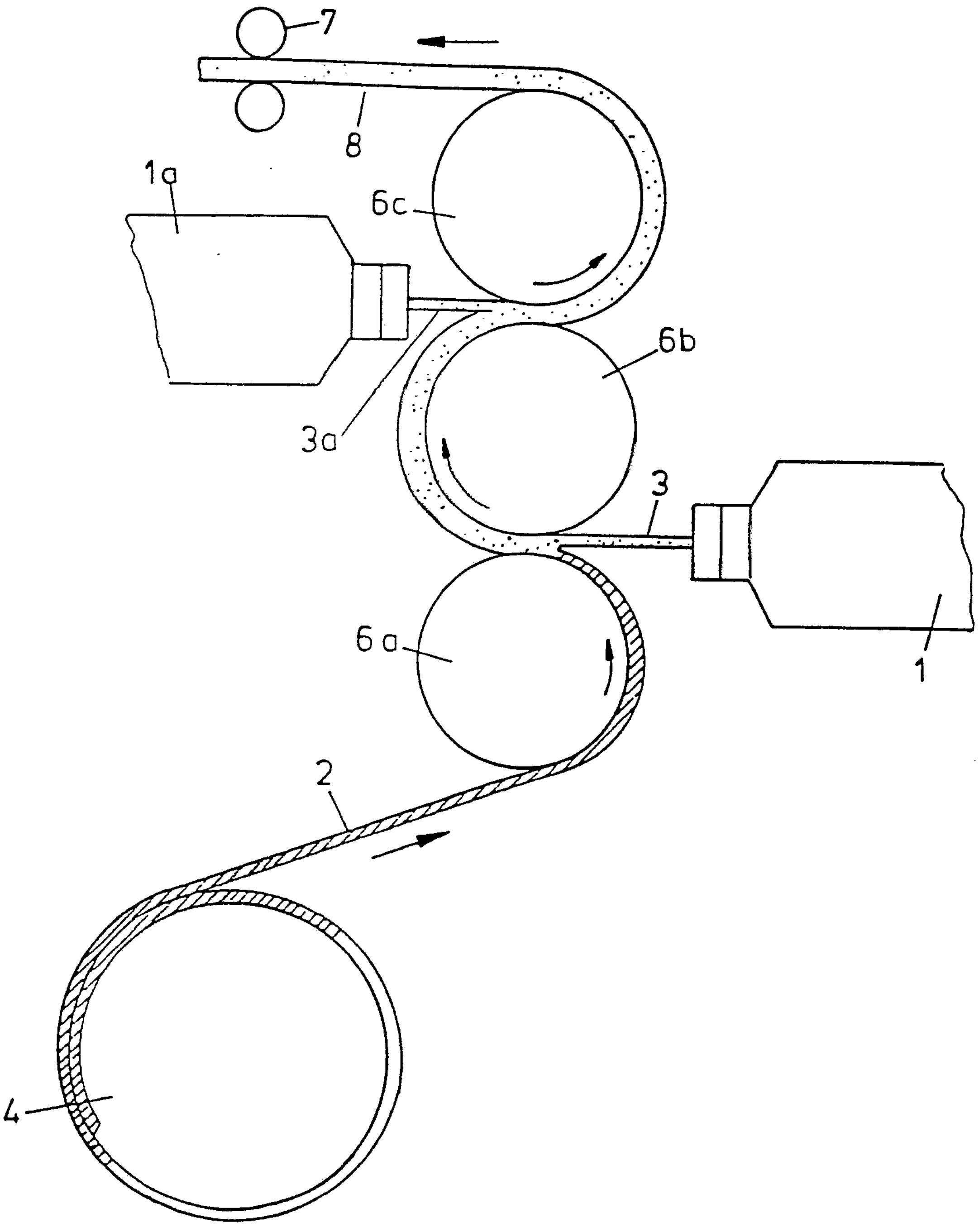


Fig. 1